# EUROPEAN PATENT APPLICATION

(11) **EP 1 395 052 A1**
(43) Date of publication of application: **03.03.2004**
(21) Application number: 03255272.1
(22) Date of filing: 26.08.2003
(51) Int. Cl.: H04N 5/74, H04N 5/72

(54) **Light transmittive screen and rear projector**

(30) Priority: 30.08.2002 JP 2002255256; 07.03.2003 JP 2003062065
(71) Applicant: SEIKO EPSON CORPORATION, Shinjuku-ku, Tokyo 163-0811 (JP)
(72) Inventor: Sakaguchi, Masafumi Seiko Epson Corporation, Suwa-shi Nagano-ken 392-8502 (JP); Yamashita, Hideto Seiko Epson Corporation, Suwa-shi Nagano-ken 392-8502 (JP)
(74) Representative: Cloughley, Peter Andrew

(57) **Abstract**

The invention seeks to provide a transmissive screen which does not readily cause light diffraction and the generation of moire fringing and to provide a rear projector having such a superior transmissive screen. A transmissive screen including a Fresnel lens portion (110) having Fresnel lens components on the surface of the light-exiting face thereof, a microlens array portion (120) disposed at the light-exiting face side of the Fresnel lens portion and having many microlenses on the surface of the light-incident face, and a light diffusing portion (130) disposed between the Fresnel lens portion and the microlens array portion. A rear projector having such a superior transmissive screen.

## Description

The present invention relates to a transmissive screen and a rear projector.

Recently, the demand for transmissive screens as displays suitable for home theater monitors and wide-screen television sets has increased.

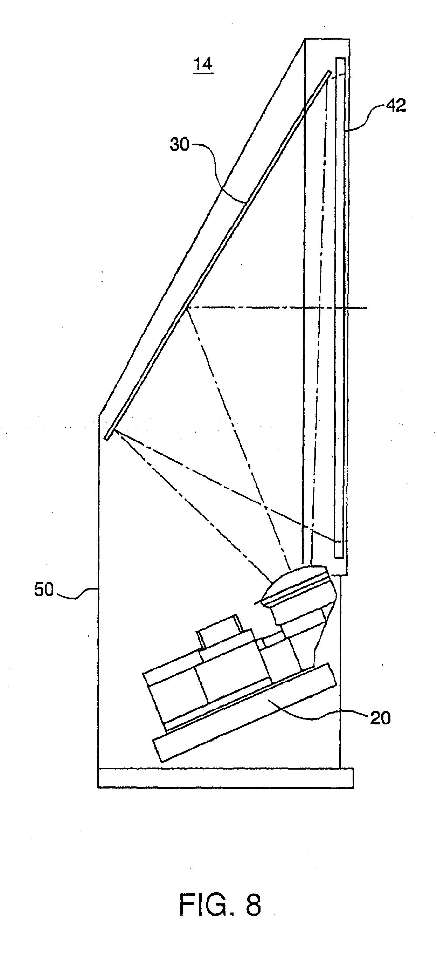

Fig. 8 illustrates an optical system of a rear projector. As shown in Fig. 8, a rear projector 14 includes a housing 50 that accommodates an optical projection unit 20 for projecting an image, a light-guide mirror 30 for guiding the image projected by the optical projection unit 20, and a transmissive screen 42 on which the projected image optically guided by the light-guide mirror 30 is projected.

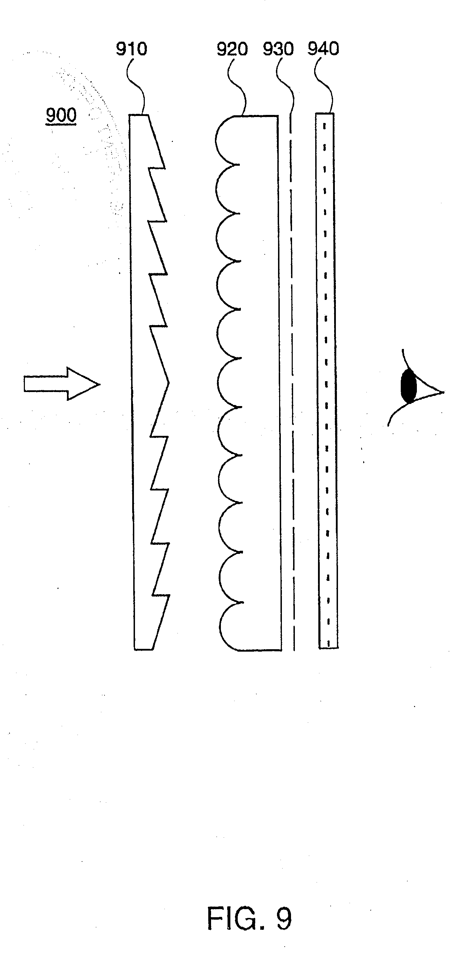

In particular, wide viewing angle characteristics are desired in the transmissive screen 42 used for the rear projector 14. Patent document 1 discloses a transmissive screen having such wide viewing angle characteristics. Fig. 9 is a cross-sectional view of the transmissive screen. As shown in Fig. 9, the transmissive screen 900 includes a Fresnel lens portion 910 having Fresnel lens components on the light-exiting face thereof, a microlens array portion 920 disposed at the light-exiting surface side of the Fresnel lens portion 910 and having many microlenses on the light-incident face thereof, a light shield portion 930 which is disposed at the light-exiting face side of the microlens array portion 920, and a light diffusing sheet 940 which is disposed at the light-exiting face side of the light shield 930.

Accordingly, the transmissive screen 900 advantageously has satisfactory viewing angle characteristics in the vertical direction because of the light refraction by the microlenses.

Unfortunately, light diffraction readily occurs in the above transmissive screen 900. Furthermore, there is also a problem that moire fringing readily occurs on the transmissive screen 900.

### [Patent document 1]

Japanese Unexamined Patent Application Publication No.2000-131506 (Fig. 1)

Accordingly, it is an object of the present invention to provide a transmissive screen which does not readily cause light diffraction and moire fringing, and to provide a rear projector having such a superior transmissive screen.

As a result of intensive study for solving the problems mentioned above, the inventors of the present invention have found that the generation of light diffraction and moire fringing on a transmissive screen is effectively suppressed by disposing a light diffusing portion between a Fresnel lens portion and a microlens array portion, and have thus completed the present invention.
(1) A transmissive screen according to the present invention includes a Fresnel lens portion having Fresnel lens components on the light-exiting face thereof, a microlens array portion disposed at the light-exiting face side of the Fresnel lens portion and having many microlenses on the light-incident face, and a light diffusing portion disposed between the Fresnel lens portion and the microlens array portion.
   According to the transmissive screen of the present invention, the light diffusing portion disposed between the Fresnel lens portion and the microlens array portion effectively suppresses the generation of light diffraction and moire fringing.
   The inventors of the present invention analyzed the mechanism of light diffraction in the above-described conventional transmissive screen and found that in the conventional transmissive screen, a plurality of microlenses are compactly arranged at regular intervals in the microlens array, thereby causing light diffraction. In the present invention the light diffusing portion is disposed at the light-incident face side of the microlens array portion, and accordingly, the regularity (such as the intensity, the angle, and the phase) of light entering each microlens is decreased. As a result, light diffraction was effectively suppressed so as not to occur in the microlens array portion.
   Furthermore, the inventors of the present invention analyzed the mechanism of the generation of moire fringing in the above-described conventional transmissive screen. It was found that the Fresnel lens portion, which has a regular structure wherein Fresnel lens components are arrayed at regular intervals, and the microlens array portion, which also has a regular structure wherein microlenses are arrayed at regular intervals, overlap each other, although the intervals of the Fresnel lens components and the microlenses are not same. The overlapping causes a regular interference pattern, which generates moire fringing. In the present invention, the light diffusing portion is disposed between the Fresnel lens portion and the microlens array portion. Accordingly, the light passing through the Fresnel lens portion is diffused at the light diffusing portion and then enters the microlens array portion, thereby suppressing the generation of the regular interference pattern. The generation of moire fringing in the Fresnel lens portion and the microlens array portion can be effectively suppressed.
(2) The light diffusing portion in the transmissive screen according to item (1) preferably diffuses light substantially at the surface thereof.
   The thinner the light diffusing portion containing a light-diffusing agent, the lower the light diffusion. On the other hand, even if the thickness of the base material forming the light diffusing portion is thin, the light diffusing portion diffusing light substantially at the surface also exhibits satisfactory light diffusion. Therefore, the thickness of the base material forming the light diffusing portion can be reduced. A short distance between the Fresnel lens portion and the microlens array portion is possible, thereby minimizing the generation of a ghost image, a decrease in contrast, and a decrease in transmittance due to internal diffusion. As the distance between the Fresnel lens portion and the microlens array portion is increased, the resolution deteriorates. However, use of the light diffusing portion diffusing light substantially at the surface reduces the thickness of the base material forming the light diffusing portion. Therefore, the distance between the Fresnel lens portion and the microlens array portion is not too large, thereby preventing the deterioration of the resolution.
(3) The light diffusing portion in the transmissive screen according to (1) or (2) preferably has a haze value ranging from 5% to 99%.
   The reason that the haze value of the light diffusing portion is 5% or more is to suppress the generation of light diffraction and moire fringing to an acceptable level, by sufficiently decreasing the regularity (such as the intensity, the angle, and the phase) of light entering each microlens. In this respect, the haze value of the light diffusing portion is more preferably 20% or more, and most preferably 50% or more. On the other hand, the reason that the haze value of the light diffusing portion is 99% or less is to suppress the generation of fuzziness and defocus due to an excessively high haze value, to an acceptable level. In this respect, the haze value of the light diffusing portion is more preferably 83% or less, and most preferably 75% or less.
(4) The light diffusing portion in the transmissive screen according to any one of (1) to (3) preferably has a gloss value ranging from 5% to 65%.
   The reason that the gloss value of the light diffusing portion is 65% or less is to suppress the generation of light diffraction and moire fringing to an acceptable level, by sufficiently suppressing the generation of a regular interference pattern caused by overlapping of the Fresnel lens portion having Fresnel lens components arrayed at regular intervals and the microlens array portion having microlenses arrayed at regular intervals. In this respect, the gloss value of the light diffusing portion is more preferably 50% or less, and most preferably 30% or less. On the other hand, the reason that the gloss value of the light diffusing portion is 5% or more is to suppress the generation of graininess and defocus due to an excessively small gloss value to an acceptable level. In this respect, the gloss value of the light diffusing portion is more preferably 10% or more, and most preferably 20% or more.
(5) The light diffusing portion in the transmissive screen according to any one of (1) to (4) preferably has a surface of substantially conical irregularities.
   Using the above light diffusing portion in the transmissive screen of the present invention suppresses the generation of light diffraction and moire fringing to an acceptable level. Furthermore, the height difference of the irregularities in the transmissive screen according to the present invention more preferably ranges from 5 µm to 20 µm.
(6) The light diffusing portion in the transmissive screen according to any one of (1) to (5) preferably comprises a resin sheet whose one surface is roughened.
   Using the above light diffusing portion suppresses the generation of light diffraction and moire fringing to an acceptable level. The resin sheet is manufactured by relatively simple processes: the resin sheet is manufactured by means of a die whose surface is roughened by sandblasting. The roughness is transferred to the surface of the resin sheet by a molding or extrusion process.
(7) The microlenses in the transmissive screen according to any one of (1) to (6) preferably have a diameter ranging from 10 µm to 150 µm.
   The reason that the diameter of the microlenses is 150 µm or less is to prevent the resolution from decreasing. An excessively large diameter of the microlenses, compared with the size of the pixel projected on the transmissive screen, decreases the resolution. In this respect, the diameter of the microlenses is more preferably 100 µm or less, and most preferably 80 µm or less. On the other hand, the reason that the diameter of the microlenses is 10 µm or more is to simplify the manufacturing. In this respect, the diameter of the microlenses is more preferably 20 µm or more, and most preferably 30 µm or more.
(8) The microlens array in the transmissive screen according to any one of (1) to (7) preferably has microlenses arrayed in the vertical and horizontal directions such that the adjacent microlenses have common edges and the microlens array is rotated by 45°.
   The microlenses are arrayed without gaps along the directions of the microlens array. Accordingly, a large effective area of the microlenses in the microlens array portion can be secured, thereby enhancing the light utilization efficiency.
   The microlenses in the microlens array portion are arranged in the way described above, and are further rotated by 45°. Accordingly, the entrance pupil of each microlens in the vertical and horizontal directions can be increased in the transmissive screen including the above microlens array portion. As a result, light is diffused sufficiently in the vertical and horizontal directions of the screen by strong refraction of the peripheral region of each microlens (which is not present in the oblique directions of the screen). Accordingly, wider viewing angle characteristics are achieved in the transmissive screen of the rear projector.
(9) A rear projector according to the present invention includes an optical projection unit and the transmissive screen according to any one of (1) to (8).

As a result, the rear projector according to the present invention includes a transmissive screen having a uniformly wide view angle in the horizontal and vertical directions and does not readily cause light diffraction and the generation of moire fringing. Accordingly, the rear projector has a superior display quality by suppressing light diffraction and the generation of moire fringing.

Embodiments of the present invention will now be described by way of further example only and with reference to the drawings; in which:-
Fig. 1 is a cross-sectional view of a transmissive screen according to a first embodiment of the present invention.
Fig. 2 is an exploded perspective view of the transmissive screen according to the first embodiment of the present invention.
Fig. 3 is an SEM image of a surface of a resin sheet composing a light diffusing portion according to the first embodiment of the present invention.
Fig. 4 is an SEM photograph of a surface of a microlens array portion according to the first embodiment of the present invention.
Fig. 5 is an external view of a rear projector according to a second embodiment of the present invention.
Fig. 6 illustrates an optical system of the rear projector according to the second embodiment of the present invention.
Fig. 7 illustrates an optical system of a rear projector according to a third embodiment of the present invention.
Fig. 8 is illustrates an optical system of a conventional rear projector.
Fig. 9 illustrates a cross-sectional view of the conventional transmissive screen.

### (First embodiment)

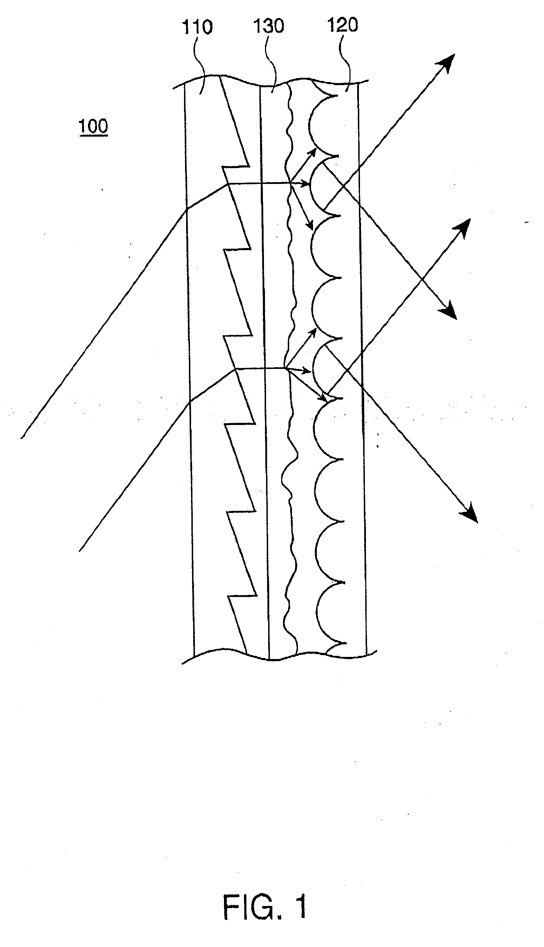

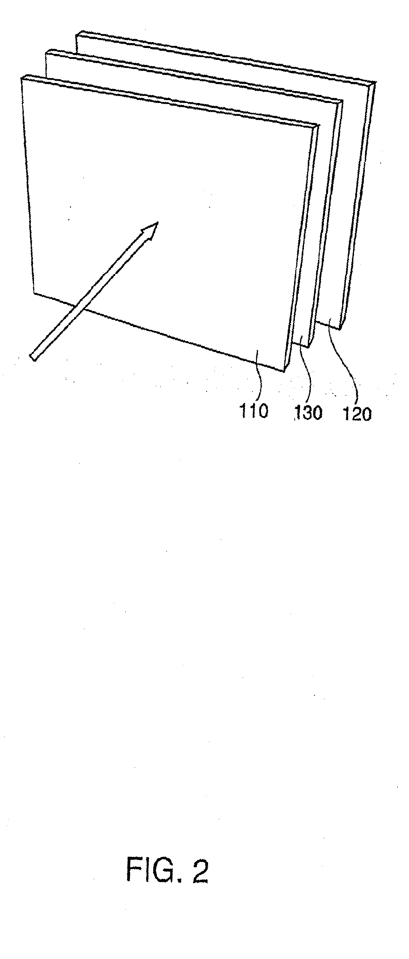

Fig. 1 is a cross-sectional view of a transmissive screen according to a first embodiment. Fig. 2 is an exploded perspective view of the transmissive screen according to the first embodiment. As shown in Figs. 1 and 2, the transmissive screen 100 includes a Fresnel lens portion 110 having Fresnel lens components on the light-exiting face thereof, a microlens array portion 120 disposed at the light-exiting face side of the Fresnel lens portion 110 and having many microlenses on the light-incident face thereof, and a light diffusing portion 130 disposed between the Fresnel lens portion 110 and the microlens array portion 120.

According to the transmissive screen 100, the light diffusing portion 130 disposed between the Fresnel lens portion 110 and the microlens array portion 120 effectively suppresses the generation of light diffraction and moire fringing on the transmissive screen 100.

As shown in the first embodiment, the light diffusing portion 130 arranged on the light-incident face side of the microlens array portion 120 decreases the regularity (such as the intensity, the angle, and the phase) of light entering each microlens, thereby effectively suppressing light diffraction in the microlens array portion 120.

Furthermore, as shown in the first embodiment, the light diffusing portion 130 is disposed between the Fresnel lens portion 110 and the microlens array portion 120; hence, the light passing through the Fresnel lens portion is diffused in the light diffusing portion 130 and then enters the microlens array portion 120. As a result, generation of a regular interference pattern is suppressed and generation of moire fringing at the Fresnel lens portion 110 and the microlens array portion 120 is effectively suppressed.

According to the transmissive screen 100 in the first embodiment, the light diffusing portion 130 is a surface light-diffusible resin sheet (the light is diffused substantially at the surface of the resin), one surface of which is roughened. Since the light is diffused at the surface of the resin sheet, even a thin resin sheet also exhibits satisfactory light diffusion. Therefore, the distance between the Fresnel lens portion 110 and the microlens array portion 120 can be reduced, thereby minimizing the generation of a ghost image, a decrease in contrast, and a decrease in transmittance due to internal diffusion. The resin sheet is manufactured by means of a die whose surface is roughened by sandblasting. The roughness is transferred to the surface of the resin sheet by a molding or extrusion process. Accordingly, a light diffusing portion that can sufficiently suppress the generation of light diffraction and moire fringing to an acceptable level can be manufactured by a relatively simple process.

According to the transmissive screen 100 in the first embodiment, the light diffusing portion 130 has a haze value of 60%. Therefore, not only is the generation of fuzziness and defocus sufficiently suppressed, but also the generation of light diffraction and moire fringing on the screen can be sufficiently suppressed to an acceptable level.

According to the transmissive screen 100 in the first embodiment, the light diffusing portion 130 has a gloss value of 20%. Therefore, not only is the generation of the appearance of graininess and defocus sufficiently suppressed, but also the generation of light diffraction and moire fringing on the screen can be sufficiently suppressed to an acceptable level.

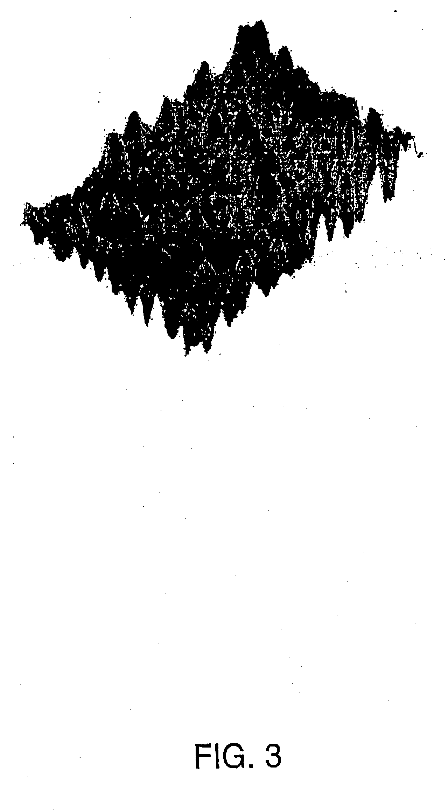

Fig. 3 is an SEM photograph of a surface of the resin sheet composing the light diffusing portion 130. As shown in Fig. 3, the surface of the resin sheet composing the light diffusing portion 130 has substantially conical irregularities. The height difference of the irregularities ranges from 5 µm to 20 µm. According to the transmissive screen 100 in the first embodiment, the generation of light diffraction and moire fringing can be sufficiently suppressed to an acceptable level.

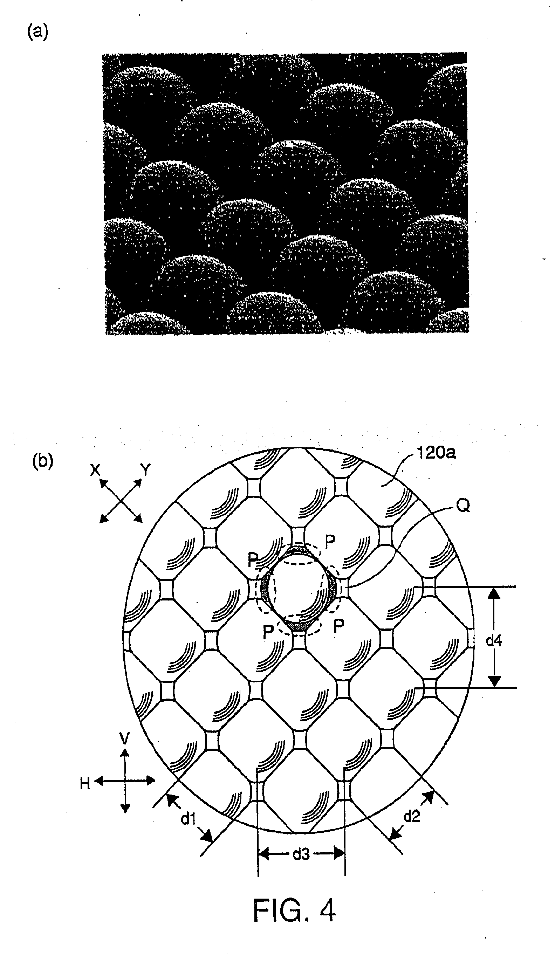

Fig. 4 illustrates the surface of the microlens array portion 120. Fig. 4(a) is an SEM image of the surface and Fig. 4(b) is a partially enlarged plan view of the surface. As shown in Figs. 4(a) and 4(b), microlenses 120a in the microlens array portion 120 are arrayed two-dimensionally along the X and Y directions shown in Fig. 4(b) such that the adjacent microlenses 120a have common edges. In other words, the microlenses 120a are arrayed without gaps at least along the X and Y directions. Accordingly, a large effective area of the microlenses 120a in the microlens array portion 120 can be secured, thereby enhancing the light utilization efficiency.

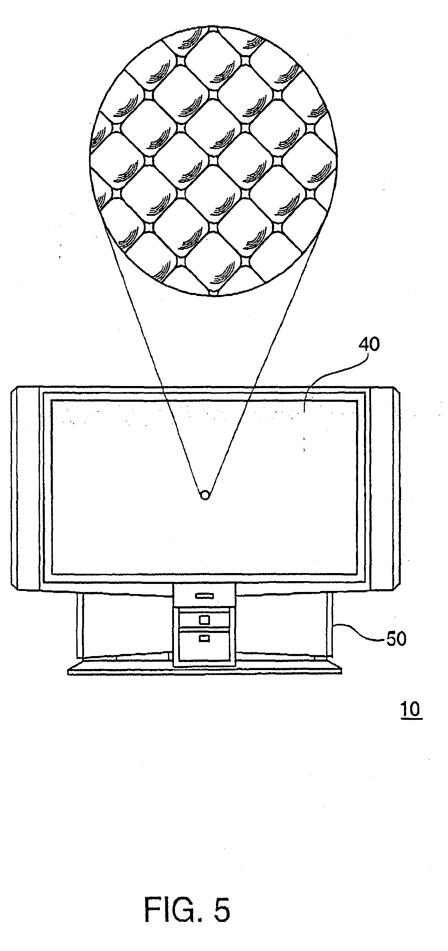

The microlenses 120a in the microlens array portion 120 arrayed along the X and Y directions are rotated by 45° when provided in the transmissive screen 100 (refer to Fig. 5). In other words, the microlenses 120a in the transmissive screen 100 are arrayed in the oblique directions (in the X and Y directions) of the transmissive screen 100. Therefore, pitches (or intervals) d3 and d4 in the oblique directions (in the V and H directions) of the microlenses 120a are longer than pitches (or intervals) d1 and d2 in the vertical and horizontal directions (in the X and Y directions) of the microlenses 120a, thereby enlarging the entrance pupil of each microlenses 120a in the vertical and horizontal directions (in the V and H directions) of the screen. As a result, light is diffused sufficiently in the vertical and horizontal directions of the screen (in the V and H directions) by strong refraction in a peripheral region P of each microlenses (which is not present in the oblique directions (in the X and Y directions) of the screen). Accordingly, better viewing angle characteristics can be achieved as a transmissive screen of a rear projector.

If the microlenses 120a are arrayed more closely in the X and Y directions, a non-lens region Q, which exists in the gap between the adjacent microlenses 120a in the vertical and horizontal directions (in the V and H directions) of the screen, can be eliminated. In this case, the light utilization efficiency is further enhanced and better viewing angle can be achieved as a transmissive screen of a rear projector.

The diameter of the microlenses 120a in the microlens array portion 120 is 40 µm. Accordingly, the deterioration of the display quality due to decreased resolution can be prevented. Since the microlenses 120a are arrayed in the vertical and horizontal directions in the microlens array portion 120 without gaps, the array pitches of the microlenses are 30 µm or less in the two directions.

### (Second embodiment)

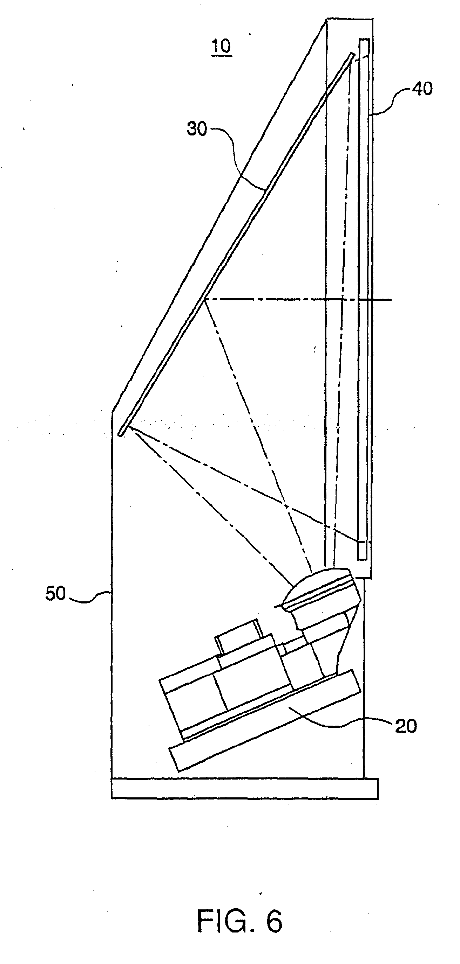

Fig. 5 is an external view of a rear projector according to a second embodiment of the present invention. Fig. 6 illustrates an optical system of the rear projector according to the second embodiment of the present invention. As shown in Figs. 5 and 6, a rear projector 10 according to the second embodiment includes a housing 50 that accommodates an optical projection unit 20, a light-guide mirror 30, and a transmissive screen 40.

The transmissive screen 40 in the rear projector 10 is the transmissive screen 100 according to the first embodiment, which does not readily cause light diffraction and moire fringing. Therefore, the rear projector has a superior display quality with suppressed light diffraction and moire fringing.

### (Third embodiment).

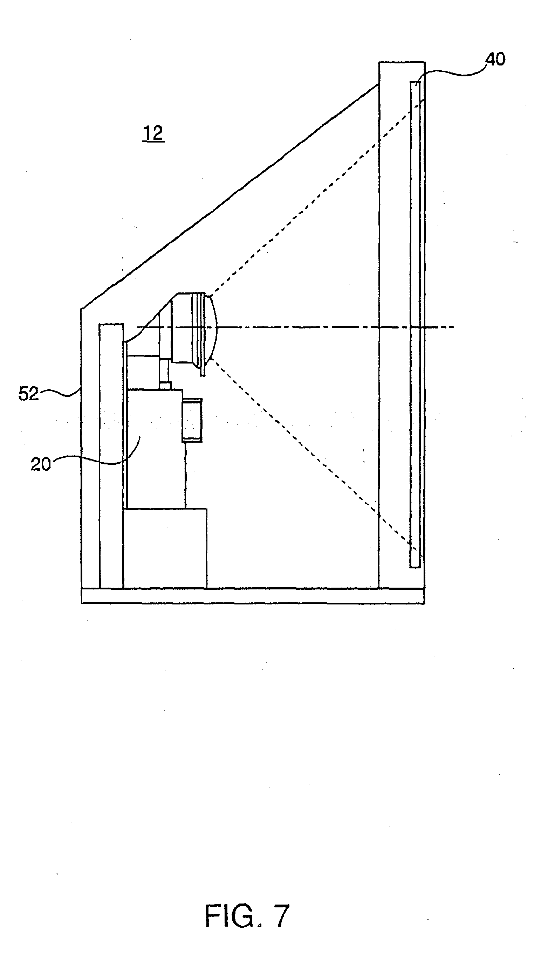

Fig. 7 illustrates an optical system of a rear projector according to a third embodiment of the present invention. As shown in Fig. 7, a rear projector 12 according to the third embodiment includes a housing 52 that accommodates an optical projection unit 20, and a transmissive screen 40.

The difference between the rear projector 12 according to the third embodiment and the rear projector 10 according to the second embodiment is the presence or the absence of the light-guide mirror 30. Whereas the rear projector 10 according to the second embodiment includes the light-guide mirror 30, the rear projector 12 according to the third embodiment includes no light-guide mirror. Accordingly, image deterioration due to reflection of the projected image by the light-guide mirror can be eliminated, thereby enhancing the display quality of the image projected on the transmissive screen 40.

The transmissive screen 40 in the rear projector 12 is also the transmissive screen 100 according to the first embodiment, which does not readily cause light diffraction and moire fringing. Therefore, the rear projector has a superior display quality with suppressed light diffraction and moire fringing.

Although the transmissive screen of the present invention has been explained referring to the transmissive screen 100 according to the first embodiment, the rear projector 10 according to the second embodiment, and the rear projector 12 according to the third embodiment, the transmissive screen of the present invention is not limited to them. For example, transmissive screens having black stripes, a light diffusion plate, and other microlenses at the light-exiting face side of the microlens array portion 120 are also acceptable. Various modifications are possible without departing from the scope of the present invention.

## Claims

1. A transmissive screen comprising a Fresnel lens portion having Fresnel lens components on the light-exiting face thereof, a microlens array portion disposed at the light-exiting face side of the Fresnel lens portion and having many microlenses on the light-incident face, and a light diffusing portion disposed between the Fresnel lens portion and the microlens array portion.

2. The transmissive screen according to Claim 1, wherein the light diffusing portion diffuses light substantially at the surface thereof.

3. The transmissive screen according to Claim 1 or Claim 2, wherein the light diffusing portion has a haze value ranging from 5% to 99%.

4. The transmissive screen according to any one of Claim 1 to Claim 3, wherein the light diffusing portion has a gloss value ranging from 5% to 65%.

5. The transmissive screen according to any one of Claim 1 to Claim 4, wherein the light diffusing portion has a surface having substantially conical irregularities.

6. The transmissive screen according to any one of Claim 1 to Claim 5, wherein the light diffusing portion comprises a resin sheet whose one surface is roughened.

7. The transmissive screen according to any one of Claim 1 to Claim 6, wherein the microlenses have a diameter ranging from 10 µm to 150 µm.

8. The transmissive screen according to any one of Claim 1 to Claim 7, wherein the microlens array portion has microlenses arrayed in the vertical and horizontal directions such that the adjacent microlenses have common edges and the microlens array is rotated by 45°.

9. A rear projector comprising an optical projection unit and a transmissive screen according to any one of Claim 1 to Claim 8.
